# EUROPÄISCHE PATENTSCHRIFT

(11) **EP 3 014 145 B1**
(45) Veröffentlichungstag und Bekanntmachung des Hinweises auf die Patenterteilung: **18.10.2017**
(21) Anmeldenummer: 14733088.0
(22) Anmeldetag: 24.06.2014
(51) Int. Cl.: F16H 53/02, F16H 53/04, F01L 1/047

(54) **VERSTELLBARE NOCKENWELLE**
ADJUSTABLE CAMSHAFT
ARBRE À CAMES RÉGLABLE

(30) Priorität: 27.06.2013 DE 102013106747
(43) Veröffentlichungstag der Anmeldung: 04.05.2016
(73) Patentinhaber: Thyssenkrupp Presta Teccenter Ag, 9492 Eschen (LI)
(72) Erfinder: KUNZ, Michael, 09116 Chemnitz (DE); DIETEL, Uwe, 08115 Lichtentanne (DE); MEUSEL, Jürgen, 09573 Dittmannsdorf (DE)
(74) Vertreter: thyssenkrupp Intellectual Property GmbH
(86) Internationale Anmeldenummer: PCT/EP2014/001711
(87) Internationale Veröffentlichungsnummer: WO 2014/206553

(56) Entgegenhaltungen:
- DE-A1-102007 016 977
- DE-A1-102009 012 143
- US-A1- 2008 257 290

## Beschreibung

Die vorliegende Erfindung betrifft eine verstellbare Nockenwelle für den Ventiltrieb einer Brennkraftmaschine mit einer Außenwelle und mit einer in der Außenwelle konzentrisch verlaufenden und dieser verdrehbar aufgenommenen Innenwelle, wobei auf der Außenwelle wenigstens ein Nockenelement mit einer Nockenbohrung verdrehbar gelagert ist, und wobei das Nockenelement mit der Innenwelle verdrehfest verbunden ist.

### STAND DER TECHNIK

Verstellbare Nockenwellen für Ventiltriebe von Brennkraftmaschinen mit in ihrer Phasenlage gegeneinander verstellbaren Nockenelementen ermöglichen die Steuerung von Einlassventilen und von Auslassventilen der Brennkraftmaschine mit unterschiedlichen Steuerzeiten, ohne dass für die Einlassventile eine Einlassnockenwelle und für die Auslassventile eine separate Auslassnockenwelle erforderlich ist. Die ineinander liegenden Wellen rotieren um eine gemeinsame Rotationsachse im Zylinderkopf und können über ein Steuerorgan in ihrer Phasenlage zueinander verstellt werden. Die Nockenelemente werden dabei unter Bildung eines Gleitlagerspaltes auf der Außenseite der Außenwelle verdrehbar aufgenommen. Über einen Bolzen werden die Nockenelemente dabei mit der Innenwelle verdrehfest verbunden, und um die Bolzen durch die Außenwelle hindurchzuführen, weist die Außenwelle entsprechende sich in Umfangsrichtung länglich ausgebildete Bolzenöffnungen auf. Das Dokument US2008/0257290A1 zeigt eine verstellbare Nockenwelle gemäß dem Oberbegriff des Anspruchs 1. Beispielsweise zeigt die DE 10 2009 012 143 A1 eine verstellbare Nockenwelle für den Ventiltrieb einer Brennkraftmaschine mit einer Außenwelle und mit einer in der Außenwelle konzentrisch verlaufenden und in dieser drehbar aufgenommenen Innenwelle. Auf der Außenseite der Außenwelle sind Lagerhülsen aufgepresst, die zur drehbaren Aufnahme der Nockenelemente und gleichzeitig zur drehbaren Lagerung der Nockenwelle im Zylinderkopf dienen. Die Lagerhülsen weisen hierfür eine entsprechende Länge auf und müssen auf die Außenseite der Außenwelle aufgeschoben werden. Um die Nockenelemente auf den Lagerhülsen anzuordnen, müssen diese zuvor aufwendig nachbearbeitet werden, insbesondere um Rückstände einer maschinellen Bearbeitung der Außenfläche der Lagerhülsen zu entfernen. Für die gemeinsame Lagerung der Nockenelemente auf den Lagerhülsen und zur Lagerung der Nockenwelle im Zylinderkopf sind die Lagerhülsen erheblich breiter ausgeführt, und es ist eine Bearbeitung der Lagerhülsen über eine große axiale Länge erforderlich. Weiterhin ergibt sich der Nachteil, dass durch die Lagerhülsen der Gleitlagerdurchmesser anwächst, auf dem die Nockenelemente auf der Außenwelle der Nockenwelle verdrehbar gelagert sind, wodurch sich die Reibung, die in der Gleitlageranordnung entsteht, unnötig erhöht.

### OFFENBARUNG DER ERFINDUNG

Aufgabe der Erfindung ist die Verbesserung der Lageranordnung von Nockenelementen auf der Außenwelle einer verstellbaren Nockenwelle. Insbesondere ist es die Aufgabe der vorliegenden Erfindung, eine verstellbare Nockenwelle mit einem vereinfachten Aufbau und einer vereinfachten Montage bereitzustellen. Schließlich ergibt sich die Aufgabe, eine entstehende Reibung in der Lageranordnung der Nockenelemente auf der Außenwelle der verstellbaren Nockenwelle zu minimieren.

Diese Aufgabe wird ausgehend von einer verstellbaren Nockenwelle gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass in der Nockenbohrung eine Lagerhülse eingebracht ist, die mit dem Nockenelement verdrehfest verbunden ist, sodass zwischen der Lagerhülse und der Außenwelle ein Gleitlagerspalt gebildet ist.

Die Erfindung nutzt vorteilhaft die Möglichkeit, eine Lagerhülse in der Nockenbohrung des Nockenelementes verdrehfest einzubringen, sodass die Gleitlagerpaarung zwischen der Innenoberfläche der Lagerhülse und der Außenoberfläche der Außenwelle stattfinden kann. Dadurch wird der Wirkradius der Gleitlagerung verringert, zudem kann die Montage der verstellbaren Nockenwelle erleichtert werden, da nicht zunächst Lagerhülsen auf der Außenwelle der verstellbaren Nockenwelle aufgebracht werden müssen, um anschließend die Nockenelemente auf den Lagerhülsen zu platzieren.

Ein besonderer Vorteil entsteht insbesondere dadurch, dass die Ausgestaltung der Lagerhülsen in den Nockenelementen, insbesondere hinsichtlich einer vorteilhaften Materialwahl, den spezifischen Belastungen der Gleitlagerung der Nockenelemente auf der Außenwelle angepasst werden kann. Die Lagerhülsen werden nach der erfindungsgemäßen Ausgestaltung nicht zugleich zur Lagerung der Nockenwelle im Zylinderkopf herangezogen, welche Lagerung höheren Belastungen standhalten muss, als die Lagerung der Nockenelemente auf der Außenwelle. Durch den sich verkleinernden Wirkradius der Gleitlageranordnung zwischen der Innenseite der Lagerhülse und der Außenseite der Außenwelle verringert sich zudem die Reibung der Lagerung der Nockenelemente auf der Außenwelle.

Mit besonderem Vorteil kann die Lagerhülse in die Nockenbohrung eingepresst sein. Durch den so gebildeten Reibschluss kann die Lagerhülse verdrehfest mit dem Nockenelement verbunden sein, derart, dass sichergestellt ist, eine Verdrehung der Lagerhülse in der Nockenbohrung zu verhindern. Zusätzlich kann die Lagerhülse in der Nockenbohrung verstiftet werden, um einen Formschluss zwischen der Lagerhülse und dem Nockenelement zu schaffen.

Mit weiterem Vorteil kann die Lagerhülse eine axiale Länge aufweisen, mit der sich diese über der gesamten Breite des Nockenelementes erstreckt. Damit kann die Lagerhülse der Breite des Nockenelementes angepasst sein, insbesondere sodass sich ein Gleitlagerspalt ausbildet, der eine axiale Länge aufweist, die der Breite des Nockenelementes entspricht. Die Breite des Nockenelementes bestimmt sich dabei insbesondere durch die Länge der Nockenbohrung, durch die die Außenwelle hindurchgeführt ist.

Das Nockenelement ist als Bundnockenelement mit einem Nockengrundkörper und mit einem Nockenbund ausgebildet wobei die Lagerhülse eine axiale Länge aufweisen kann, mit der sich diese über der Breite des Nockengrundkörpers und des Nockenbundes hinweg erstreckt.

Gemäß einer weiteren möglichen Ausführung zur Bildung einer Gleitlagerung ist das Nockenelement als Bundnockenelement ausgebildet und die Lagerhülse kann eine axiale Länge aufweisen, mit der sich diese nur über der Breite des Nockengrundkörpers erstreckt. Folglich kann die Lagerhülse auch nur über einen Teilabschnitt in die Nockenbohrung eingeführt sein, der sich unter dem eigentlichen Nockenelement befindet, insbesondere da nur über das Nockenelement Wirkkräfte des Nockenelementes in den Nockengrundkörper eingeleitet werden, da der Kontakt mit einem Abgriffselement, beispielsweise ein Kipphebel oder ein Ventil, auf die axiale Breite des Nockengrundkörpers beschränkt ist. Der Nockenbund dient dabei vorzugsweise zur verdrehfesten Verbindung des Nockenelementes mit der Innenwelle.

Gemäß einer weiteren Ausgestaltung der Lageranordnung kann die Nockenbohrung einen radialen Absatz aufweisen, der zwischen einem ersten Innendurchmesserbereich mit einem größeren Durchmesser zur Aufnahme der Lagerhülse und einem zweiten Innendurchmesserbereich des Nockenbundes mit einem kleineren Durchmesser ausgebildet ist. Die Lagerhülse kann über der axialen Breite des größeren Innendurchmessers in diesen eingepresst werden, bis eine axiale Stirnfläche der Lagerhülse gegen den radialen Absatz zur Anlage gelangt.

Zur verdrehfesten Verbindung des Nockenelementes mit der Innenwelle ist ein Bolzen vorgesehen der sich quer durch die Innenwelle und durch wenigstens eine in der Außenwelle eingebrachte Bolzenöffnung hindurch erstreckt. Der Bolzen ist dabei mit zumindest einem seiner Enden im Nockenelement aufgenommen wodurch die verdrehstarre Verbindung des Nockenelementes mit der Innenwelle über den Bolzen hergestellt wird. Erstreckt sich die Lagerhülse auch über den Bereich, in dem der Bolzen eingebracht ist, so ist in der Lagerhülse wenigstens eine radiale Durchgangsöffnung ausgebildet durch die sich der Bolzen hindurch erstreckt. Insbesondere dann, wenn der Bolzen im Bereich des Nockenbundes eingebracht ist und sich die Lagerhülse auch durch den Nockenbund erstreckt, sind radiale Durchgangsöffnungen in die Lagerhülse eingebracht durch die zusätzlich zum Reibschluss durch das Einpressen der Lagerhülse in die Nockenbohrung die Lagerhülse durch Formschluss axial gesichert ist.

Gemäß einer weiteren vorteilhaften Ausgestaltung der Lagerung des Nockenelementes auf der Außenwelle kann die Lagerhülse einen Bronzewerkstoff, einen Messingwerkstoff oder Legierungen aus Bronze und Messing aufweisen. Alternativ kann die Lagerhülse auch einen Kunststoffwerkstoff aufweisen. Der Kunststoffwerkstoff kann beispielsweise ein Polyoxymethylen (POM) oder beispielsweise ein Polyimid (PI) umfassen. Mit weiterem Vorteil kann die Innenlauffläche der Lagerhülse eine Beschichtung aufweisen, die beispielsweise eine Polytetrafluorethylen-Beschichtung (PTFE) umfasst. Insbesondere bei der Verwendung von PTFE-Beschichtungen in der Lagerhülse ergeben sich vorteilhafte Notlaufeigenschaften bei Mangelschmierung.

Gemäß einer weiteren vorteilhaften Ausführung der Lagerhülse kann die Innenlauffläche glatt ausgeführt sein oder vorzugsweise eine strukturierte Laufoberfläche aufweisen, die insbesondere näpfchen- oder rillenartige Vertiefungen umfasst, durch die ein Schmierstoffreservoir gebildet werden kann. Die strukturierte Oberfläche kann beispielsweise durch ein Laserstrahlbearbeitungsverfahren, ein Honverfahren, ein Elektronenstrahlverfahren oder durch Ätzverfahren erzeugt werden.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: eine Querschnittsansicht einer Nockenwelle gemäß einem ersten Ausführungsbeispiel der Erfindung,
- Fig. 1a: eine Detailansicht I gemäß Figur 1,
- Fig. 2: ein Ausführungsbeispiel einer Nockenwelle in einer Querschnittsansicht gemäß einem zweiten Ausführungsbeispiel der Erfindung,
- Fig. 2a: eine Detailansicht II gemäß Figur 2,
- Fig. 3: ein Ausführungsbeispiel einer Nockenwelle in einer Querschnittsansicht gemäß einem dritten Ausführungsbeispiel der Erfindung,
- Fig. 3a: eine Detailansicht III gemäß Figur 3.

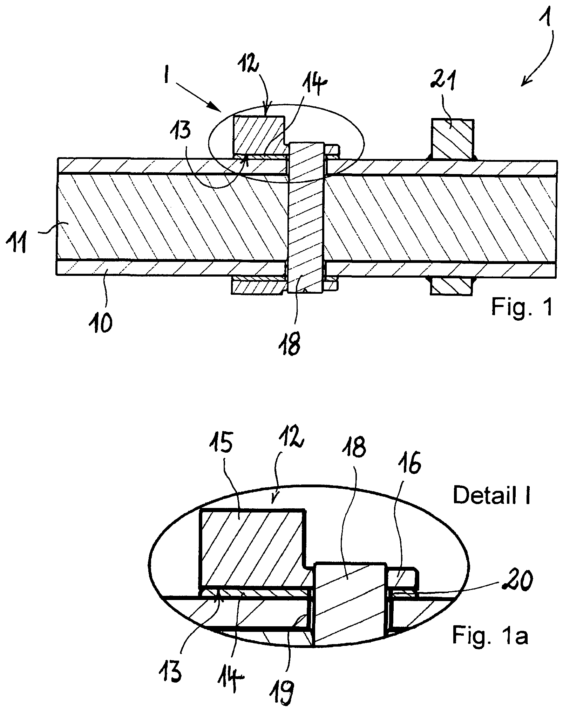

Die Figuren 1 und 1 a zeigen in einer Querschnittsansicht ein erstes Ausführungsbeispiel einer Nockenwelle 1, wobei Figur 1a das Detail I gemäß Figur 1 zeigt. Die Nockenwelle 1 ist als verstellbare Nockenwelle 1 ausgeführt und dient zum Ventiltrieb einer Brennkraftmaschine, bei der Einlassventile und Auslassventile über eine gemeinsame Nockenwelle 1 mit variablen Steuerzeiten angetrieben werden können. Die Nockenwelle 1 umfasst eine Außenwelle 10, durch die sich eine Innenwelle 11 hindurch erstreckt, und die Innenwelle 11 ist drehbar in der Außenwelle 10 aufgenommen. Außenseitig auf der Außenwelle 10 ist ein Nockenelement 12 drehbar aufgenommen, und ein weiteres Nockenelement 21 ist in einer starren Anordnung auf der Außenwelle 10 dargestellt. Das Nockenelement 12 ist über einen Bolzen 18 mit der Innenwelle 11 verbunden, und der Bolzen 18 erstreckt sich quer durch die Innenwelle 11 und ist endseitig im Nockenelement 12 aufgenommen. Die gezeigten Bolzenöffnungen 19 zur Hindurchführung des Bolzens 18 durch die Außenwelle 10 weisen in Umfangsrichtung eine Längserstreckung auf, sodass die Innenwelle 11 in der Außenwelle 10 über einen definierten Winkelbereich verdrehen kann, wobei diese Verdrehung durch das Nockenelement 12 auf der Außenseite der Außenwelle 10 ebenfalls ausgeführt wird. Im Ergebnis kann das Nockenelement 12 gegen das Nockenelement 21 in seiner Phasenlage verändert werden.

Zur Aufnahme des Nockenelementes 12 auf der Außenwelle 10 weist das Nockenelement 12 eine Nockenbohrung 13 auf, durch die sich die Außenwelle 10 hindurch erstreckt. Erfindungsgemäß ist in der Nockenbohrung 13 eine Lagerhülse 14 verdrehfest mit dem Nockenelement 12 eingesetzt, und die Innenseite der Lagerhülse 14 dient gemeinsam mit der Außenseite der Außenwelle 10 zur Bildung einer Gleitlageranordnung. Die Lagerhülse 14 ist gemäß dem gezeigten Ausführungsbeispiel in die Nockenbohrung 13 eingepresst, sodass diese selbsthaltend und damit verdrehfest in der Nockenbohrung 13 eingebracht ist. Die Lagerhülse 14 weist einen vom Werkstoff des Nockenelementes 12 abweichenden Werkstoff auf, insbesondere weist die Lagerhülse 14 einen Messingwerkstoff, einen Bronzewerkstoff oder einen Kunststoffwerkstoff auf, und das Nockenelement 12 weist einen Stahlwerkstoff auf.

Wie insbesondere im Detail I gemäß Figur 1 a dargestellt, ist das Nockenelement 12 als Bundnockenelement ausgebildet und weist einen Nockengrundkörper 15 und einen Nockenbund 16 auf. Der Bolzen 18 ist dabei mit seiner Endseite im Nockenbund 16 aufgenommen und erstreckt sich sowohl durch die in der Außenwelle 10 eingebrachte Bolzenöffnung 19 als auch durch eine Durchgangsöffnung 20 hindurch, die in der Lagerhülse 14 eingebracht ist. Die axiale Länge der Lagerhülse 14 entspricht dabei der axialen Länge des Nockenelementes 12, aufweisend den Nockengrundkörper 15 und den Nockenbund 16.

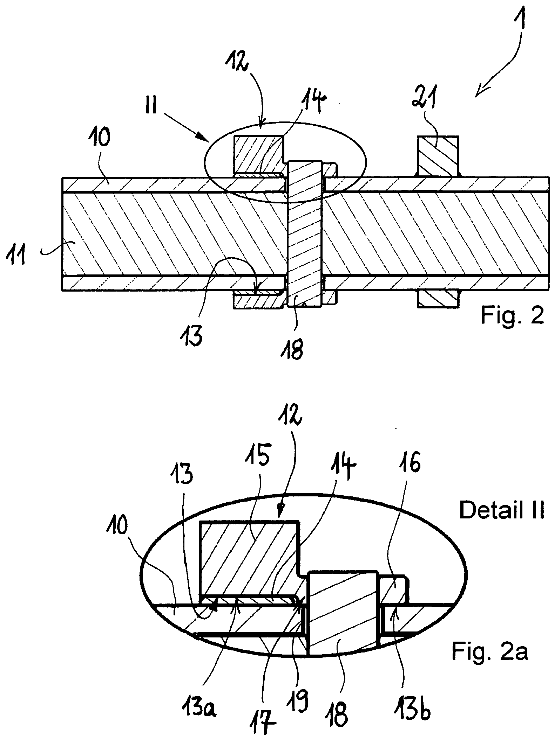

Die Figuren 2 und 2a zeigen ein weiteres Ausführungsbeispiel der Nockenwelle 1 mit einer Außenwelle 10 und einer Innenwelle 11 und ein Nockenelement 12 ist über einen Bolzen 18 verdrehfest mit der Innenwelle 11 verbunden, wobei ein weiteres Nockenelement 21 mit der Außenwelle 10 starr verbunden ist, wie in Figur 2a gezeigt. In der Nockenbohrung 13 im Nockenelement 12 ist eine Lagerhülse 14 eingesetzt, und mit der Lagerhülse 14 wird gegen die Außenseite der Außenwelle 10 eine Gleitlageranordnung zur verdrehbaren Aufnahme des Nockenelementes 12 auf der Außenwelle 10 gebildet. Das Nockenelement 12 ist als Bundnockenelement mit einem Nockengrundkörper 15 und einem Nockenbund 16 ausgeführt. Die Nockenbohrung 13 weist gemäß dem gezeigten Ausführungsbeispiel einen ersten Innendurchmesserbereich 13a auf, der einen größeren Innendurchmesser besitzt, und die Nockenbohrung 13 weist einen zweiten Innendurchmesserbereich 13b mit einem kleineren Durchmesser auf. Dabei erstreckt sich der erste Innendurchmesserbereich 13a über die axiale Breite des Nockengrundkörpers 15, und der zweite Innendurchmesserbereich 13b erstreckt sich über die axiale Breite des Nockenbundes 16.

Der erste Innendurchmesserbereich 13a mit dem größeren Durchmesser dient zur Aufnahme der Lagerhülse 14, welche eine axiale Länge aufweist, die der axialen Länge des ersten Innendurchmesserbereiches 13a entspricht. Der Übergang vom ersten Innendurchmesserbereich 13a in den zweiten Innendurchmesserbereich 13b bildet einen radialen Absatz 17, gegen den die Lagerhülse 14 beim Einpressen in die Nockenbohrung 13 axial zur Anlage gelangen kann.

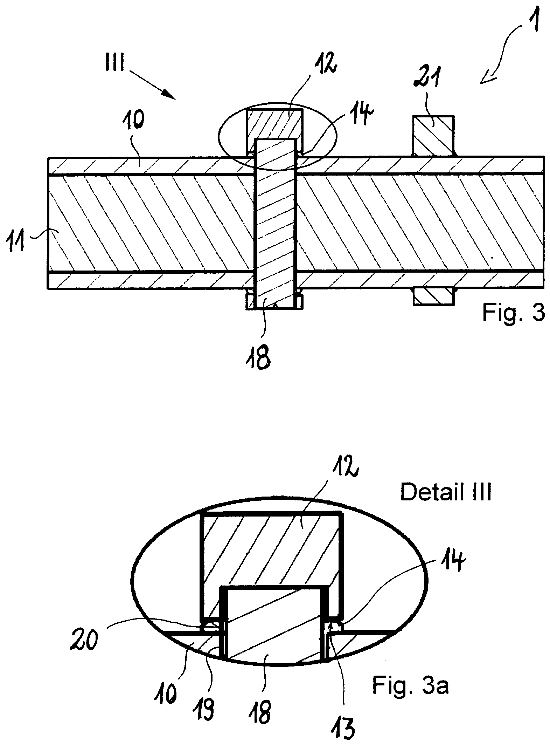

Der Durchmesser des zweiten Innendurchmesserbereiches 13b entspricht dabei etwa dem Außendurchmesser der Außenwelle 10, wobei der radiale Spalt zwischen dem zweiten Innendurchmesserbereich 13b und dem Außendurchmesser der Außenwelle 10 derart ausgebildet sein kann, dass sich im Bereich des Nockenbundes 16 keine Tragwirkung der Gleitlageranordnung ergibt. Die Figuren 3 und 3a zeigen ein weiteres Ausführungsbeispiel einer Nockenwelle 1 für den Ventiltrieb einer Brennkraftmaschine mit einer Außenwelle 10 und einer sich konzentrisch durch die Außenwelle 10 hindurcherstreckenden Innenwelle 11, wobei ein Nockenelement 12 gezeigt ist, welches mit einem Bolzen 18 verdrehfest mit der Innenwelle 11 drehbar auf der Außenwelle 10 aufgenommen ist, wie in Figur 3a im Detail III vergrößert gezeigt. Das weitere Nockenelement 21 ist dabei starr auf der Außenwelle 10 der Nockenwelle 1 aufgenommen.

Das Nockenelement 12 weist keinen Nockenbund auf, und in die Nockenbohrung 13 des Nockenelementes 12 ist eine Lagerhülse 14 eingebracht, die der axialen Breite des Nockenelementes 12 entspricht. Der Bolzen 18 erstreckt sich dabei sowohl durch eine Bolzenöffnung 19 in der Außenwelle 10 als auch durch eine Durchgangsöffnung 20 in der Lagerhülse 14, um schließlich mit mindestens einer Endseite im Nockenelement 12 einzusitzen. Dadurch, dass der Bolzen 18 durch die Durchgangsöffnung 20 in der Lagerhülse 14 hindurchgeführt bzw. in dieser eingepresst ist, ist die Lagerhülse 14 auf vorteilhafte Weise verliersicher mit dem Nockenelement 12 und dem Bolzen 18 verbunden, und der zwischen dem Bolzen 18 und der Durchgangsöffnung 20 gebildete Formschluss kann zusätzlich zum Reibschluss zwischen der Außenseite der Lagerhülse 14 und der Nockenbohrung 13 verhindern, dass die Lagerhülse 14 seitlich aus dem Nockenelement 12 herauswandern kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmalen und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Nockenwelle

- 10: Außenwelle
- 11: Innenwelle
- 12: Nockenelement
- 13: Nockenbohrung
- 13a: erster Innendurchmesserbereich
- 13b: zweiter Innendurchmesserbereich
- 14: Lagerhülse
- 15: Nockengrundkörper
- 16: Nockenbund
- 17: radialer Absatz
- 18: Bolzen
- 19: Bolzenöffnung
- 20: Durchgangsöffnung
- 21: Nockenelement

## Patentansprüche

1. Verstellbare Nockenwelle (1) für den Ventiltrieb einer Brennkraftmaschine mit einer Außenwelle (10) und mit einer in der Außenwelle (10) konzentrisch verlaufenden und in dieser verdrehbar aufgenommenen Innenwelle (11), wobei auf der Außenwelle (10) wenigstens ein Nockenelement (12) mit einer Nockenbohrung (13) verdrehbar gelagert ist, und wobei das Nockenelement (12) mit der Innenwelle (11) verdrehfest verbunden ist, wobei
in der Nockenbohrung (13) eine Lagerhülse (14) eingebracht ist, die mit dem Nockenelement (12) verdrehfest verbunden ist, sodass zwischen der Lagerhülse (14) und der Außenwelle (10) ein Gleitlagerspalt gebildet ist, wobei die Lagerhülse (14) der Breite des Nockenelementes (12) angepasst ist, **dadurch gekennzeichnet, dass** das Nockenelement (12) als Bundnockenelement mit einem Nockengrundkörper (15) und mit einem zum Nockengrundkörper (15) benachbarten Nockenbund (16) ausgebildet ist, wobei zur verdrehfesten Verbindung des Nockenelementes (12) mit der Innenwelle (11) ein Bolzen (18) vorgesehen ist, der sich quer durch die Innenwelle (11) und durch wenigstens eine in der Außenwelle (10) eingebrachte Bolzenöffnung (19) hindurch erstreckt und mit zumindest einem Ende im Nockenbund (16) einsitzt, wobei die Lagerhülse (14) wenigstens eine radiale Durchgangsöffnung (20) aufweist, durch die sich der Bolzen (18) hindurch erstreckt.

2. Verstellbare Nockenwelle (1) nach Anspruch 1, **dadurch gekennzeichnet, dass** die Lagerhülse (14) in die Nockenbohrung (13) eingepresst ist.

3. Verstellbare Nockenwelle (1) nach Anspruch 1 oder 2, **dadurch gekennzeichnet, dass** die Lagerhülse (14) eine axiale Länge aufweist, mit der sich diese über der gesamten Breite des Nockenelementes (12) erstreckt.

4. Verstellbare Nockenwelle (1) nach einem der Ansprüche 1 bis 3, **dadurch gekennzeichnet, dass** die Lagerhülse (14) eine axiale Länge aufweist, mit der sich diese über der Breite des Nockengrundkörpers (15) und des Nockenbundes (16) hinweg erstreckt.

5. Verstellbare Nockenwelle (1) nach einem der Ansprüche 1 bis 3, **dadurch gekennzeichnet, dass** die Lagerhülse (14) eine axiale Länge aufweist, mit der sich diese nur über der Breite des Nockengrundkörpers (15) erstreckt, so dass die Lagerhülse (14) nur über einen Teilabschnitt in der Nockenbohrung (13) eingeführt ist.

6. Verstellbare Nockenwelle (1) nach Anspruch 5, **dadurch gekennzeichnet, dass** die Nockenbohrung (13) einen radialen Absatz (17) aufweist, der zwischen einem ersten Innendurchmesserbereich (13a) mit einem größeren Innendurchmesser zur Aufnahme der Lagerhülse (14) und mit einem zweiten Innendurchmesserbereich (13b) mit einem kleineren Innendurchmesser des Nockenbundes (16) ausgebildet ist.

7. Verstellbare Nockenwelle (1) nach einem der vorgenannten Ansprüche, **dadurch gekennzeichnet, dass** die Lagerhülse (14) einen Bronzewerkstoff, einen Messingwerkstoff oder einen Kunststoffwerkstoff aufweist.

8. Verstellbare Nockenwelle (1) nach einem der vorgenannten Ansprüche, **dadurch gekennzeichnet, dass** die Innenlauffläche der Lagerhülse (14) eine Beschichtung, insbesondere umfassend eine Polytetrafluorethylen- Beschichtung, aufweist.

9. Verstellbare Nockenwelle (1) nach einem der vorgenannten Ansprüche, **dadurch gekennzeichnet, dass** die Innenlauffläche der Lagerhülse (14) eine strukturierte Oberfläche aufweist, die insbesondere näpfchen- oder rillenartige Vertiefungen umfasst, durch die ein Schmierstoffreservoire bildbar ist.

## Claims

1. Adjustable camshaft (1) for the valve drive of an internal combustion engine with an outer shaft (10) and an inner shaft (11) running concentrically and held rotatably in the outer shaft (10), wherein at least one cam element (12) with a cam bore (13) is mounted rotatably on the outer shaft (10), and wherein the cam element (12) is connected rotationally fixedly to the inner shaft (11), wherein a bearing sleeve (14) which is connected rotationally fixedly to the cam element (12) is inserted into the cam bore (13) so that a slide bearing gap is formed between the bearing sleeve (14) and the outer shaft (10), wherein the bearing sleeve (14) is adapted to the width of the cam element (12), **characterized in that** the cam element (12) is formed as a collared cam element with a cam base body (15) and a cam collar (16) adjacent to the cam base body (15), wherein a bolt (18) is provided for connecting the cam element (12) to the inner shaft (11) in a rotationally fixed manner, and extends transversely through the inner shaft (11) and through at least one bolt opening (19) made in the outer shaft (10), and sits with at least one end in the cam collar (16), wherein the bearing sleeve (14) has at least one radial passage opening (20) through which the bolt (18) extends.

2. Adjustable camshaft (1) according to Claim 1, **characterized in that** the bearing sleeve (14) is pressed into the cam bore (13).

3. Adjustable camshaft (1) according to Claim 1 or 2, **characterized in that** the bearing sleeve (14) has an axial length with which it extends over the entire width of the cam element (12).

4. Adjustable camshaft (1) according to any of Claims 1 to 3, **characterized in that** the bearing sleeve (14) has an axial length with which it extends over the entire width of the cam base body (15) and the cam collar (16).

5. Adjustable camshaft (1) according to any of Claims 1 to 3, **characterized in that** the bearing sleeve (14) has an axial length with which it extends only over the width of the cam base body (15) so that the bearing sleeve (14) is introduced into the cam bore (13) only via a part portion.

6. Adjustable camshaft (1) according to Claim 5, **characterized in that** the cam bore (13) has a radial shoulder (17) which is formed between a first inner diameter region (13a) with a larger inner diameter for receiving the bearing sleeve (14) and a second inner diameter region (13b) with a smaller inner diameter of the cam collar (16).

7. Adjustable camshaft (1) according to any of the preceding claims, **characterized in that** the bearing sleeve (14) comprises a bronze material, a brass material or a plastic material.

8. Adjustable camshaft (1) according to any of the preceding claims, **characterized in that** the inner bearing surface of the bearing sleeve (14) has a coating, in particular comprising a polytetrafluoroethylene coating.

9. Adjustable camshaft (1) according to any of the preceding claims, **characterized in that** the inner bearing surface of the bearing sleeve (14) has a structured surface which in particular comprises cup-like or groove-like recesses which may form a lubricant reservoir.

## Revendications

1. Arbre à cames réglable (1) pour la commande des soupapes d'un moteur à combustion interne avec un arbre extérieur (10) et un arbre intérieur (11) s'étendant de façon concentrique dans l'arbre extérieur (10) et monté de façon rotative dans celui-ci, dans lequel au moins un élément de came (12) avec un alésage de came (13) est monté de façon rotative sur l'arbre extérieur (10), et dans lequel l'élément de came (12) est solidaire en rotation avec l'arbre intérieur (11), dans lequel un coussinet de palier (14), qui est solidaire en rotation avec l'élément de came (12), est introduit dans l'alésage de came (13), de telle manière qu'il se forme une fente de palier lisse entre le coussinet de palier (14) et l'arbre extérieur (10), dans lequel le coussinet de palier (14) est adapté à la largeur de l'élément de came (12), **caractérisé en ce que** l'élément de came (12) est réalisé sous la forme d'un élément de came à rebord avec un corps de base de came (15) et un rebord de came (16) voisin du corps de base de came (15), dans lequel il est prévu pour la solidarisation en rotation de l'élément de came (12) avec l'arbre intérieur (11) un boulon (18), qui s'étend transversalement à travers l'arbre intérieur (11) et à travers au moins une ouverture de boulon (19) pratiquée dans l'arbre extérieur (10) et qui s'appuie par au moins une extrémité dans le rebord de came (16), dans lequel le coussinet de palier (14) présente au moins une ouverture de passage radiale (20), à travers laquelle le boulon (18) s'étend.

2. Arbre à cames réglable (1) selon la revendication 1, **caractérisé en ce que** le coussinet de palier (14) est posé à la presse dans l'alésage de came (13).

3. Arbre à cames réglable (1) selon la revendication 1 ou 2, **caractérisé en ce que** le coussinet de palier (14) présente une longueur axiale, avec laquelle celui-ci s'étend sur toute la largeur de l'élément de came (12).

4. Arbre à cames réglable (1) selon l'une quelconque des revendications 1 à 3, **caractérisé en ce que** le coussinet de palier (14) présente une longueur axiale, avec laquelle celui-ci s'étend par-dessus la largeur du corps de base de came (15) et du rebord de came (16).

5. Arbre à cames réglable (1) selon l'une quelconque des revendications 1 à 3, **caractérisé en ce que** le coussinet de palier (14) présente une longueur axiale, avec laquelle celui-ci ne s'étend que sur la largeur du corps de base de came (15), de telle manière que le coussinet de palier (14) ne soit introduit que sur une partie dans l'alésage de came (13).

6. Arbre à cames réglable (1) selon la revendication 5, **caractérisé en ce que** l'alésage de came (13) présente un épaulement radial (17), qui est formé entre une première région de diamètre intérieur (13a) avec un plus grand diamètre intérieur pour recevoir le coussinet de palier (14) et avec une deuxième région de diamètre intérieur (13b) avec un diamètre intérieur plus petit du rebord de came (16).

7. Arbre à cames réglable (1) selon l'une quelconque des revendications précédentes, **caractérisé en ce que** le coussinet de palier (14) présente un matériau de bronze, un matériau de laiton ou un matériau de matière plastique.

8. Arbre à cames réglable (1) selon l'une quelconque des revendications précédentes, **caractérisé en ce que** la face de glissement intérieure du coussinet de palier (14) présente un revêtement, comprenant en particulier un revêtement en polytétrafluoroéthylène.

9. Arbre à cames réglable (1) selon l'une quelconque des revendications précédentes, **caractérisé en ce que** la face de glissement intérieure du coussinet de palier (14) présente une surface structurée, qui comprend des creux en particulier en forme de godets ou de stries, qui permettent de former un réservoir de lubrifiant.
